# NEUE EUROPÄISCHE PATENTSCHRIFT

(11) **EP 0 548 477 B2**
(45) Veröffentlichungstag und Bekanntmachung des Hinweises auf die Entscheidung über den Einspruch: **09.05.2001**
(45) Hinweis auf die Patenterteilung: 27.11.1996
(21) Anmeldenummer: 92116698.9
(22) Anmeldetag: 30.09.1992
(51) Int. Cl.: H01H 13/04

(54) **Tastschalter mit Ansatz**
Push-button switch with stud
Interrupteur à bouton-poussoir à saillie

(30) Priorität: 02.11.1991 DE 4136199
(43) Veröffentlichungstag der Anmeldung: 30.06.1993
(73) Patentinhaber: TRW Automotive Electronics & Components GmbH & Co. KG, 78315 Radolfzell (DE)
(72) Erfinder: Priesemuth, Wolfgang, Dipl.-Ing., 83512 Wasserburg (DE)
(74) Vertreter: Schieschke, Klaus, Dipl.-Ing.

(56) Entgegenhaltungen:
- DE-A- 3 629 650
- DE-C- 4 036 677
- US-A- 4 766 272

## Beschreibung

Die Erfindung betrifft einen Tastschalter mit einem Gehäuse und einem Taststößel, der in im wesentlichen axialer Richtung aus einer äußeren Endstellung in das Gehäuse bis in eine innere Endstellung hinein und aus dieser heraus verschiebbar ist und dabei wenigstens einen innerhalb des Gehäuses angeordneten Schalterkontakt öffnet, der nach der Verschiebung des Taststößels aus seiner äußeren Endstellung unterbrochen wird und unabhängig von den in Bewegungsrichtung auf die innere Endstellung zu diesen nachfolgenden Hubstelllungen in unterbrochenem Zustand gehalten wird. und mit einem am Gehäuse angeordneten Befestigungsbauteil zum Befestigen des Schalters an einem Befestigungselement.

Ein Tastschalter dieser Art ist bekannt (DE-A 36 29 650). Schalter dieser Art werden im allgemeinen im Kraftfahrzeugbau eingesetzt, insbesondere im Bereich von Kraftfahrzeugtüren, um als sogenannte Türkontaktschalter in Abhängigkeit des Öffnens und des Schließens der Kraftfahrzeugtür einen elektrischen Schaltkreis zu schließen bzw. zu öffnen, um beispielsweise das Fahrgastinnenraumlicht an- bzw. abzuschalten. Aufgrund ihres konstruktiven Aufbaus können diese bekannten Schalter aber auch in anderen Bereichen im Kraftfahrzeug, also nicht nur als typische Türkontaktschalter eingesetzt werden, sondern auch als Schalter, um beispielsweise im Zusammenwirken mit der Handbremse eines Kraftfahrzeugs ebenfalls einen elektrischen Schaltkreis zu schließen, um anzuzeigen, daß beispielsweise die Handbremse eines Kraftfahrzeugs angezogen ist.

Der aus der DE-PS 36 29 650 bekannte Schalter wurde bei seiner Verwendung als Schalter im Zusammenwirken mit der Handbremse eines Kraftfahrzeugs in lediglich geringfügig modifizierter Form gegenüber der Version, wie sie als Türkontaktschalter Verwendung fand, verwendet, wobei grundsätzlich aber auch die Türkontaktschalterversion als Handbremschalterversion Verwendung finden kann. Der bekannte Tastschalter wurde bisher über einen arbeitstechnisch sehr aufwendigen Nietverbindungsvorgang mit einem Befestigungselement, das Teil des Kraftfahrzeugs im Bereich der Handbremse ist, verbunden, wobei das Befestigungselement in der Regel ein Stück Stahlblech ist. Diese bisherige Art der Verbindung des Tastschalters mit den Kraftfahrzeug bzw. dem Befestigungselement hat den Nachteil, daß eine Nietverbindung sehr sorgfältige Vorbereitungsschritte und Nietverbindungsschritte erfordert, die sehr arbeitsaufwendig sind. Ein weiterer Nachteil dieser Nietverbindung ist der, daß zu Austauschzwecken, Reparatur- und Wartungszwecken die Nietverbindung zerstört werden mußte, was bei nicht sorgfältiger Ausführung in der Regel auch zu einer Zerstörung des Tastschalters führte und vielfach auch einen Schaden am Befestigungselement. an dem der Tastschalter durch die Nietverbindung befestigt ist, führte.

Es ist Aufgabe der vorliegenden Erfindung, einen Tastschalter der eingangs genannten Art zu schaffen, der derart gestaltet ist, daß eine sehr genaue aber sehr einfache Art der Befestigung an einem Kraftfahrzeugteil (Befestigungselement) möglich ist, ohne daß fremde Werkzeuge oder Verbindungsmittel erforderlich sind, wobei der Tastschalter sehr einfach im Aufbau sein soll und auf einfache Weise und damit kostengünstig herstellbar sein soll.

Gelöst wird die Aufgabe gemäß der Erfindung durch die Merkmale im kennzeichnenden Teil des Ansprüchs 1.

Der Vorteil der erfindungsgemäßen Lösung besteht im wesentlichen darin, daß der Schalter integral mit dem Schalter-Befestigungsorgan in einem Herstellungsvorgang, beispielsweise in Form eines Spritzgußteils hergestellt werden kann und der Tastschalter fremdwerkzeugfrei an -seinem Bestimmungsort positioniert und befestigt werden kann. und zwar in einem sehr einfachen, keine besondere Sorgfalt erfordernden Arbeitsschritt.

Es hat sich als vorteilhaft herausgestellt, das Gehäuse mit einem im wesentlichen parallel zum Taststößel verlaufenden Ansatz zu versehen, auf dem das Schalterbefestigungsorgan angeordnet ist.

Bei einer vorteilhaften Ausgestaltung des Tastschalters ist der Ansatz als im wesentlichen flächiges Element ausgebildet, so daß der Tastschalter eine große und damit sichere Anlagefläche auf dem ebenfalls an der entsprechenden Stelle flächig ausgebildeten Befestigungselement aufweist. Dadurch wird verhindert, daß der Tastschalter instabil aufgenommen wird und keine Fehlfunktionen des Tastschalters auftreten.

Das Befestigungsorgan selbst ist vorzugsweise im wesentlichen rechtwinklig vom Gehäuse oder von einem Teil des Gehäuses bildenden Ansatzes wegstehend ausgebildet, obwohl grundsätzlich auch andere geeignete Winkel, je nach Art und Positionierung des vorgesehenen Befestigungselement ausführbar sind.

Das Befestigungsorgan weist vorzugsweise nach Ansprüch 1 zwei voneinander beabstandete Schenkel auf, wobei die Schenkel zu ihren feien Enden hin konisch verjüngt ausgebildet sind und Hinterschneidungen nach Art eines Rastelements zur Anlage und zum Eingriff in ein Befestigungselement aufweisen. Das Befestigungsorgan braucht somit lediglich in eine Öffnung bzw. ein Loch, das im Befestigungselement ausgebildet ist, hineingedrückt zu werden und verrastet somit nach Erreichen seiner Enstellung selbständig und sichert einen ausreichend festen Halt im Befestigungselement.

Die beiden voneinander beabstandeten Schenkel können grundsätzlich auf beliebige geeignete Weise ausgebildet sein, insbesondere auch der zwischen den beiden voneinander beabstandeten Schenkel gebildete Innenraum. Um aber sicherzustellen, daß die Schenkel selbst ausreichend stabil sind, muß dafür gesorgt werden, daß diese an den Stellen, an denen eine elastische Verformbarkeit zum Eintritt in eine Öffnung oder ein Loch eines Befestigungselements gewünscht wird, so groß wie möglich gehalten wird, und an den Stellen, an denen die Verformbarkeit nicht in dem Maße gewünscht wird, die Schenkel so stabil wie möglich auszubilden. Dieses wird vorteilhafterweise nach Anspruch 1 dadurch erreicht, daß der zwischen den beiden voneinander beabstandeten Schenkeln gebildete Zwischenraum im Längsquerschnitt durch ein Oval gebildet wird.

Bei einer Ausgestaltung nach Anspruch 1 ist der größte lichte Abstand der beiden voneinander beabstandeten Schenkel geringfügig größer als die doppelte Breite der Schenkel. Auf diese Weise wird auch dem vorangehend aufgezeichneten Erfordernis Rechnung getragen, nämlich einerseits eine große Eigenstabilität der Schenkel und damit des Befestigungsorgans sicherzustellen, andererseits aber dennoch ein unproblematisches Einschieben bzw. Eindrükken in eine Befestigungsöffnung bzw. ein Loch im Befestigungselement sicherzustellen. Bei Einhaltung der vorangehend beschriebenen Maßnahme wird bei entsprechend abgestimmter Loch- bzw. Öffnungsweite im Befestigungselement ein leichtes Eindrücken des Befestigungsorgans und eine sichere Anlage am bzw. ein sicheres Eingreifen in das Loch bzw. die Öffnung im Befestigungselement auf alle Fälle gewährleistet.

Trotz sehr genau eingehaltener Maßtoleranzen bei der Herstellung des Tastschalters bzw. des Tastschaltergehäuses kann auch infolge unterschiedlicher Umgebungstemperaturen. bedingt durch äußere und innere Erwärmung des Kraftfahrzeuges und auch aufgrund der Fertigungstoleranzen des Befestigungsorgans der Fall auftreten, daß trotz genau eingehaltener Fertigungstoleranzen insbesondere des Befestigungsorgans des Tastschalters eine geringfügige Verdrehung bzw. eine geringfügige Bewegung des Tastschalters trotz in das Befestigungselement eingerastetem Befestigungsorgan möglich ist. Um auch dieses auf alle Fälle zu vermeiden, sind, insbesondere wenn keine anderen Klemm- oder Haltemaßnahmen auf Seiten des Kraftfahrzeuges selbst möglich sind. vorteilhafterweise wenigstens unmittelbar im Bereich um das Befestigungsorgan herum eine Mehrzahlvon vom Gehäuse bzw. Ansatz hervorstehenden Vorsprüngen vorgesehen, die im Querschnitt eine im wesentlichen dreieckige Form haben, und sich mit ihren Spitzen somit an das Befestigungselement selbst anlegen können. Durch die dadurch hervorgerufene hohe Reibung wird ein auch geringfügiges Verdrehen des Tastschalters relativ zum Befestigungselement vermeiden, wobei die Vorsprünge bei geeigneter Werkstoffwahl darüber hinaus noch elastische Eigenschaften haben können. wodurch die Reibung und damit die Verdrehsicherheit des Tastschalters noch einmal erhöht wird.

Vorteilhafterweise besteht wenigstens das Gehäuse, der Ansatz als Teil des Gehäuses und das Befestigungsorgan aus Kunststoff, so daß sich diese Teile integral in einem einzigen Hochdruck-Kunststoffspritzgußherstellungsschritt herstellen lassen.

Der Kunststoff ist dabei vorzugsweise Polyamid, und zwar mit oder ohne Glasfaserverstärkung, es sei aber darauf hingewiesen, daß sich grundsätzlich alle beliebigen geeigneten Kunststoffwerkstoffe dafür eignen.

Die Erfindung wird nun unter Bezugnahme auf die nachfolgenden schematischen Zeichnungen anhand eines Ausführungsbeispieles beschrieben. Darin zeigen:
- Fig. 1: in der Seitenansicht einen Tastschalter, wie er als Schalter im Zusammenwirken mit einer Kraftfahrzeughandbremse verwendet wird, und
- Fig. 2: in vergrößerter Darstellung einen Ausschnitt des Tastschalters im Querschnitt, nach seinem Eingriff mit dem Befestigungsorgan in ein flächiges Befestigungselement, beispielsweise aus Stahlblech, eines Kraftfahrzeuges.

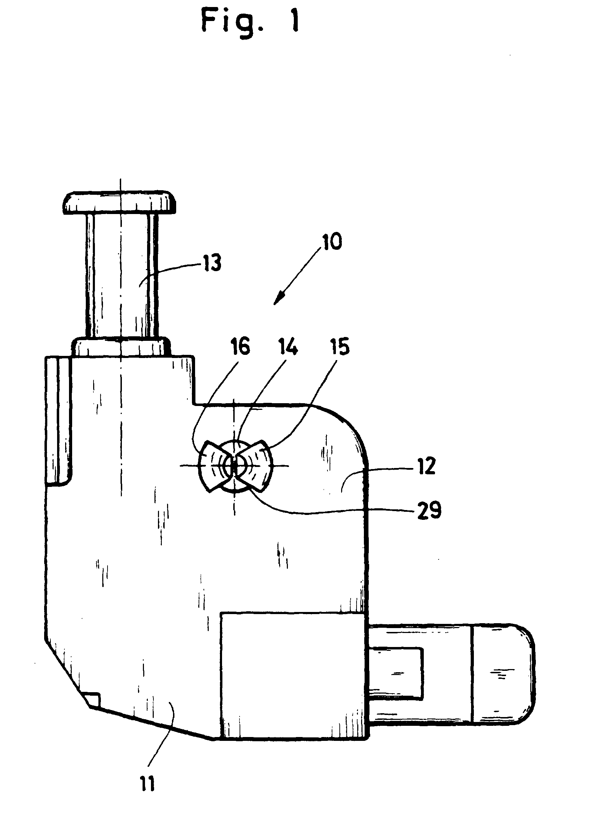

Der in Fig. 1 dargestellte Tastschalter 10 weist ein Gehäuse 11 sowie einen Befestigungsansatz 12 auf, sowie einen Taststößel 13, der auf eine Weise hin und herbewegbar ist, wie es in der DE-PS 36 29 650 beschrieben wird, worauf hier ausdrücklich Bezug genommen wird.

Am Befestigungsansatz 12, der Teil des Gehäuses 11 ist und in der Regel integral mit dem Gehäuse 11 hergestellt wird, aber nicht notwendigerweise hergestellt sein muß, ist ein im wesentlichen rechtwinklig vom Ansatz 12 hervorstehendes Befestigungsorgan 14 angeordnet. Das Befestigungsorgan 14 ist integral mit dem Befestigungsansatz 12 ausgebildet, also mit diesem zusammen in einem Spritzgußherstellungsvorgang herstellbar, es ist aber durchaus möglich, das Befestigungsorgan 14 gesondert an den Befestigungsansatz 12 anzuspritzen.

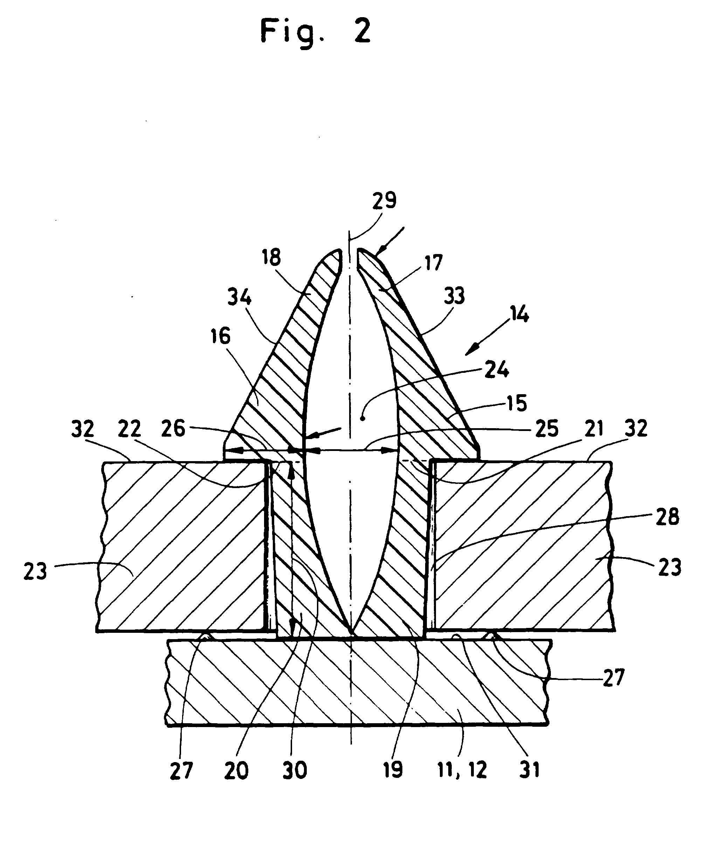

Das Befestigungsorgan 14 weist zwei voneinander beabstandete Schenkel 15, 16 auf, die im wesentlichen symmetrisch zur in Fig. 2 ersichtlichen Befestigungsorganachse 29 angeordnet sind. Die beiden Schenkel 15, 16 sind zu ihren freien Enden 17,18 hin konisch verjüngt ausgebildet und weisen Hinterschneidungen 21, 22 nach Art eines Rastelements bzw. eines Klippelements auf. Die festen Enden 19, 20, den freien Enden 17, 18 gegenüberliegend, grenzen an den Befestigungsansatz 12 bzw. das Gehäuse 11 an. Der zwischen den beiden Schenkeln 15, 16 gebildete Zwischenraum 24 ist bei der in Fig. 2 dargestellten Ausführungsform des Tastschalters 10 im Querschnitt durch ein Oval gebildet. Die kleine Achse des Ovals, d. h. der größte lichte Abstand 25 der beiden voneinander beabstandeten Schenkel 15, 16, ist geringfügig größer gewählt als die doppelte größte Breite 26 der Schenkel 15, 16. Der Abstand 30 zwischen den Hinterschneidungen 21, 22 zur entsprechenden Fläche 31, mit der der Befestigungsansatz 12 bzw. das Gehäuse 11 an einem kraftfahrzeugeigenem Befestigungselement 23 anliegt, ist derart gewählt, daß eine Verschiebung des Befestigungsansatzes 12 im Loch 28 des Befestigungselementes bei eingerastetem Befestigungsorgan 14 nicht mehr möglich ist. Um dieses auf alle Fälle auch bei auftretenden Herstellungstoleranzen des Befestigungsorgans 14 bzw. des damit zusammenwirkenden Befestigungselementes 23 sicherstellen zu können, sind im Bereich um das Befestigungsorgan herum eine Mehrzahl von der Fläche 31 des Ansatzes 12 hervorstehende Vorsprünge 27 vorgesehen. Diese ermöglichen auch ein Sicherung gegen eine mögliche Verdrehung des Befestigungsansatzes 12 bzw. des Gehäuses 11 um die Befestigungsorganachse 29. Eine geringfügige elastische Verformung des Befestigungsansatzes 12 bzw. Gehäuses 11 um die Vorsprünge 27 in Richtung der Befestigungsorganachse 29 ermöglicht einen sicheren Sitz des Befestigungsorgans 14 im Loch 28 bzw. eine sichere Anlage der Hinterschneidungen 21, 22 auf der Fläche 32 des Befestigungselementes 23. Aufgrund der Ausbildung des Gehäuses 11, des Ansatzes 12 und des Befestigungsorgans 14 aus Kunststoff, beispielsweise Polyamid bzw. Polyamid 6, mit und ohne Glasfaserverstärkung, ist die Elastizität der Schenkel 15, 16 beim Einführvorgang in das Loch 28 des Befestigungselements 23 bei einer gleichzeitig hohen Eigenstabilität des Befestigungsorgans 14 sichergestellt.

Zum Eingriff des Befestigungsorgans in das Loch 28 des Befestigungselements 13 wird das Befestigungsorgan 14 zunächst mit seinen auf den Schenkeln 15, 16 ausgebildeten konischen Flächen 33, 34 auf die Lochöffnung 28 gesetzt und es wird in Richtung der Befestigungsorganachse 29 ein Druck von außen auf den Befestigungsansatz 12 bzw. das Gehäuse 11 in diesem Bereich ausgeübt. Bedingt durch den geeignet groß gewählten Zwischenraum 24 zwischen den beiden voneinander beabstandeten Schenkeln 15, 16 werden die Schenkel 15, 16 in Abhängigkeit einer weiteren Kraftausübung in Richtung der Befestigungsorganachse 29 derart aufeinander zu bewegt, daß der Abstand 25 und somit der Zwischenraum 24 immer kleiner werden, bis der Zwischenraum 24 schließlich zu Null wird. Da der größte lichte Abstand 25 der beiden voneinander beabstandeten Schenkel 15, 16 geringfügig größer als die doppelte Breite 26 der Schenkel 15, 16 ist, können die konischen Flächen 33, 34 ungehindert das Loch 28 passieren, je weiter das Befestigungsorgan 14 durch das Loch 28 hindurchgeschoben wird, bis die Vorsprünge 27 an dem Befestigungselement 23 anliegen. Durch die geeignete Wahl des Abstandes 30 können dann die Schenkel 15, 16 aufgrund ihrer elastischen Eigenschaften wiederum nach außen verspringen, und zwar in einen Zustand, wie er in Fig. 2 dargestellt ist. Dann liegen die Schenkel 15, 16 mit ihren Hinterschneidungen 21, 22 nach Art einer in Eingriffstellung befindlichen Rastverbindang auf der Fläche 32 des Befestigungselements 23 auf und sichern das Befestigungsorgan 14 vor einem Heraustreten aus dem Loch 28.

Diese einfache Art der Befestigung des Tastschalters, die ohne Fremdwerkzeug auf einfache Weise durchgeführt werden kann, schafft eine erhebliche Verminderung der Montage- und Gestehungskosten eines derartigen Tastschalters und vermindert die zur Befestigung im Kraftfahrzeug nötigen Montagearbeiten auf ein Minimum.

### Bezugszeichenliste

- 10: Tastschalter
- 11: Gehäuse
- 12: Befestigungsansatz
- 13: Taststößel
- 14: Schalter-Befestigungsorgan
- 15: Schenkel
- 16: Schenkel
- 17: freies Ende
- 18: freies Ende
- 19: freies Ende
- 20: freies Ende
- 21: Hinterschneidung
- 22: Hinterschneidung
- 23: Befestigungselement
- 24: Zwischenraum
- 25: Abstand
- 26: Schenkelbreite
- 27: Vorsprung
- 28: Loch
- 29: Befestigungsorganachse
- 30: Abstand
- 31: Fläche
- 32: Fläche
- 33: konische Fläche
- 34: konische Fläche

## Patentansprüche

1. Tastschalter, mit einem Gehäuse und einem Taststößel, der in im wesentlichen axialer Richtung aus einer äußeren Endstellung in das Gehäuse bis in eine innere Endstellung hinein und aus dieser heraus verschiebbar ist und dabei wenigstens einen innerhalb des Gehäuses angeordneten Schalterkontakt öffnet, der nach der Verschiebung des Taststößels aus seiner äußeren Endstellung unterbrochen wird und unabhängig von den in Bewegungsrichtung auf die innere Endstellung zu diesen nachfolgenden Hubstellungen in unterbrochenem Zustand gehalten wird, und mit einem am Gehäuse (11) angeordneten Befestigungsbauteil zum Befestigen des Schalters an einem Befestigungselement (23)
dadurch gekennzeichnet, dass
das Befestigungsbauteil ein Befestigungsorgan (14) aufweist, welches unter elastischer Verformung in ein am Befestigungselement (23) vorgesehenes Loch (28) einschiebbar und unter anschließendem Rückspringen mit dem Befestigungselement verrastbar ist, so dass der Schalter sicher am Befestigungselement gehalten ist,
und welches Befestigungsorgan (14) zwei voneinander beabstandete Schenkel (15, 16) aufweist, die zu ihren freien Enden (17, 18) hin konisch verjüngt ausgebildet sind und Hinterschneidungen (21, 22) nach Art eines Rastelements zur Anlage an und zum Eingriff in das Befestigungselement (23) aufweisen,
wobei der zwischen den beiden voneinander beabstandeten Schenkeln (15, 16) gebildete Zwischenraum (24) im Längsquerschnitt durch ein Oval gebildet wird
und der größte lichte Abstand (25) der beiden voneinander beabstandeten Schenkel (15, 16) geringfügig größer als die doppelte Breite (26) der Schenkel (15, 16) ist.

2. Tastschalter nach Anspruch 1, dadurch gekennzeichnet, daß das Gehäuse (11) mit einem im wesentlichen parallel zum Taststößel (13) verlaufenden Ansatz (12) versehen ist, auf dem das Schalterbefestigungsorgan (14) angeordnet ist.

3. Tastschalter nach Anspruch 2, dadurch gekennzeichnet, daß der Ansatz (12) als im wesentlichen flächiges Element ausgebildet ist.

4. Tastschalter nach einem oder mehreren der Ansprüche 1 bis 3, dadurch gekennzeichnet, daß das Befestigungsorgan (14) im wesentlichen rechtwinklig vom Gehäuse (11) wegsteht.

5. Tastschalter nach einem oder mehreren der Ansprüche 1 bis 4, dadurch gekennzeichnet, daß wenigstens unmittelbar im Bereich um das Befestigungsorgan (14) herum eine Mehrzahl von vom Gehäuse (11) hervorstehenden Vorsprüngen (27) vorgesehen sind.

6. Tastschalter nach einem oder mehreren der Ansprüche 1 bis 5, dadurch gekennzeichnet, daß wenigstens das Gehäuse (11), der Ansatz (12) als Teil des Gehäuses (11) und das Befestigungsorgan (14) aus Kunststoff bestehen.

7. Tastschalter nach Anspruch 6, dadurch gekennzeichnet, daß der Kunststoff Polyamid ist.

## Claims

1. Push-button switch comprising a housing and a push button which is displaceable in a substantially axial direction from an outer limit position into the housing into an inner limit position and from said inner limit position and during such displacement opens at least one switch contact which is arranged within the housing and which is interrupted after the displacement of the push button from its outer limit position and which is held in the interrupted condition independently of the stroke positions which follow in the direction of movement towards the inner limit position, and further comprising a fixing component arranged on the housing (11) for fixing the switch to a fixing element (23), characterized in that the fixing component has a fixing member (14) which can be inserted with resilient deformation into a hole (28) provided on the fixing element (23) and which can be latched to the fixing element with a subsequent springback effect so that the switch is securely mounted to the fixing element, and which fixing member (14) has two spaced-apart limbs (15, 16) which are configured so as to taper towards their free ends (17, 18) and have undercut (21, 22) in the manner of a latching element for bearing against and engaging in the fixing element (23), the intermediate space (24) formed between the two spaced-apart limbs (15, 16) being formed by an oval in longitudinal cross section, and the largest internal spacing (25) between the two spaced-apart limbs (15, 16) being slightly greater than double the width (26) of the limbs (15, 16).

2. Push-button switch according to Claim 1, characterized in that the housing (11) is provided with an attachment (12) which extends substantially parallel to the push button (13) and on which the switch fixing member (14) is arranged.

3. Push-button switch according to Claim 2, characterized in that the attachment (12) is in the form of a substantially flat element.

4. Push-button switch according to one or more of Claims 1 to 3, characterized in that the fixing member (14) projects substantially at right angles from the housing (11).

5. Push-button switch according to one or more of Claims 1 to 4, characterized in that a plurality of projections (27) projecting from the housing (11) are provided at least immediately in the region around the fixing member (14).

6. Push-button switch according to one or more of Claims 1 to 5, characterized in that at least the housing (11), the attachment (12) as part of the housing (11) and the fixing member (14) are made of plastic material.

7. Push-button switch according to Claim 6, characterized in that the plastic material is polyamide.

## Revendications

1. Commutateur à touche comprenant un boîtier et un poussoir de touche qui peut être déplacé sensiblement en direction axiale dans le boîtier depuis une position finale extérieure jusqu'à une position finale intérieure et depuis celle-ci, et qui ouvre ce faisant au moins un contact de commutateur agencé à l'intérieur du boîtier, ledit contact étant interrompu après le déplacement du poussoir de touche depuis sa position finale extérieure, et étant maintenu à l'état interrompu indépendamment des positions de course qui suivent la position finale intérieure dans la direction de déplacement vers celle-ci, et comprenant un composant de fixation agencé sur le boîtier (11) pour fixer le commutateur à un élément de fixation (23),
caractérisé en ce que,
le composant de fixation comporte un organe de fixation (14) qui est susceptible d'être introduit sous une déformation élastique dans un trou (28) prévu dans l'élément de fixation (23) et qui est capable d'être verrouillé à l'élément de fixation sous l'effet d'un retour ou rappel élastique consécutif, de sorte que le commutateur est solidement maintenu sur l'élément de fixation,
et en ce que l'organe de fixation (14) comporte deux bras (15,16) écartés l'un de l'autre, lesdits bras (15,16) étant réalisés en se rétrécissant de manière conique vers leur extrémité libre (17,18) et comportant des contre-dépouilles (21,22) à la manière d'un élément d'enclenchement destiné à venir en contact et en engagement dans un élément de fixation (23),
l'espace intermédiaire (24) inscrit entre les deux bras (15,16) écartés l'un de l'autre étant formé par un ovale en section longitudinale,
et la distance libre maximum (25) des deux bras (15,16) écartés l'un de l'autre étant légèrement supérieure au double de la largeur (26) des bras (15,16).

2. Commutateur à touche selon la revendication 1, caractérisé en ce que le boîtier (11) est pourvu d'un talon (12) qui s'étend sensiblement parallèlement au poussoir de touche (13) et sur lequel est agencé l'organe de fixation (14) du commutateur.

3. Commutateur à touche selon la revendication 2, caractérisé en ce que le talon (12) est réalisé sous forme d'un élément sensiblement plat.

4. Commutateur à touche selon une ou plusieurs des revendications 1 à 3, caractérisé en ce que l'organe de fixation (14) dépasse sensiblement perpendiculairement du boîtier (11).

5. Commutateur à touche selon une ou plusieurs des revendications 1 à 7, caractérisé en ce qu'il est prévu au moins immédiatement dans la région qui entoure l'organe de fixation (14) une pluralité de saillies (27) qui dépassent du boîtier (11).

6. Commutateur à touche selon une ou plusieurs des revendications 1 à 5, caractérisé en ce qu'au moins le boîtier (11), le talon (12) en tant que partie du boîtier (11), et l'organe de fixation (14) sont réalisés en matière plastique.

7. Commutateur à touche selon la revendication 6, caractérisé en ce que la matière plastique est du polyamide.
